(19) **Europäisches Patentamt / European Patent Office / Office européen des brevets**

(11) **EP 4 730 679 A1**

(12) **EUROPEAN PATENT APPLICATION**

(43) Date of publication:
22.04.2026 Bulletin 2026/17

(21) Application number: 25208914.9

(22) Date of filing: 15.10.2025

(51) International Patent Classification (IPC):
*H04L 1/00* (2006.01)

(52) Cooperative Patent Classification (CPC):
H04L 1/0016; H04L 1/0003; H04L 1/0009;
H04L 1/0025

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 17.10.2024 US 202463708351 P
31.03.2025 US 202519095171

(71) Applicant: Avago Technologies International
Sales
Pte. Limited
Singapore 768923 (SG)

(72) Inventors:
- Pulikkoonattu, Rethnakaran
  Irvine, 92618 (US)
- Wang, Chiwei
  Irvine, 92618 (US)
- Liu, Qijia
  Irvine, 92618 (US)
- Porat, Ron
  Irvine, 92618 (US)
- Toussi, Karim Nassiri
  Irvine, 92618 (US)

(74) Representative: Dilg, Haeusler, Schindelmann
Patentanwaltsgesellschaft mbH
Leonrodstraße 58
80636 München (DE)

(54) **SYSTEMS AND METHODS FOR SCALABLE MODULATION AND CODING SCHEME (MCS) NUMBER FORMAT**

(57) A system may include one or more processors configured to receive a first modulation and coding scheme (MCS) number greater than or equal to 1, and determine, from the first MCS number, a plurality of bits representing a part of the first MCS number and a first bit representing a difference between the part and the first MCS number. The difference may be smaller than 1. The one or more processors may determine a first set of MCS parameters corresponding to the part of the first MCS number and a second set of MCS parameters corresponding to the part of the first MCS number plus a first predetermined fractional number, select, using the first bit, a third set of MCS parameters from one of the first set of MCS parameters or the second set of MCS parameters, and modulate data using the third set of MCS parameters.

FIG. 3

EP 4 730 679 A1

## Description

### Field of the Disclosure

This disclosure generally relates to systems and methods for improving coding and/or modulation processes of a communications system, determining a fractional representation (or format) of a modulation coding scheme (MCS) number, and/or selecting MCS parameters based on a fractional representation of an MCS number.

### Background

The Ultra High Reliability (UHR) study group within the IEEE 802.11 working group is dedicated to exploring PHY (physical layer) and MAC (medium access control) technologies aimed at enhancing the reliability of WLAN (wireless local area network) connectivity. As part of its initiatives, UHR (802.11bn) is proposing the addition of new modulation coding scheme (MCS) numbers (or MCS indexes). In one approach, adding new MCS numbers involves a process of determining or designing an MCS number format.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.

FIG. 1 is a diagram depicting an example communication environment with communication systems, according to one or more embodiments.
FIG. 2 is a schematic block diagram of a computing system, according to one or more embodiments.
FIG. 3 is a diagram depicting a transmitter including a parameter selector, according to one or more embodiments.
FIG. 4A and FIG. 4B are diagrams depicting fractional representations of modulation coding scheme (MCS) numbers, according to one or more embodiments.
FIG. 5A to FIG. 5C are diagrams depicting a first example set of MCS numbers, according to one or more embodiments.
FIG. 6 shows a table indicating a second example set of MCS numbers, according to one or more embodiments.
FIG. 7 shows a table indicating a third example set of MCS numbers, according to one or more embodiments.
FIG. 8 shows a table indicating a fourth example set of MCS numbers, according to one or more embodiments.
FIG. 9 is a diagram depicting an example parameter selector receiving a 5-bit MCS number, according to one or more embodiments.
FIG. 10 is a diagram depicting another example parameter selector receiving a 6-bit MCS number, according to one or more embodiments.
FIG. 11 is a flow diagram showing a process for selecting MCS parameters based on a fractional representation of an MCS number, in accordance with an embodiment.
FIG. 12 is a flow diagram showing a process for determining a fractional representation of an MCS number, in accordance with an embodiment.

The details of various embodiments of the methods and systems are set forth in the accompanying drawings and the description below.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.
The following IEEE standard(s), including any draft versions of such standard(s), are hereby incorporated herein by reference in their entirety and are made part of the present disclosure for all purposes: WiFi Alliance standards and IEEE 802.11 standards, including but not limited to IEEE 802.11a™, IEEE 802.11b™, IEEE 802.11g™, IEEE P802.11n™; IEEE P802.11ac™; and IEEE P802.11be™ through IEEE P802.11bn™ standards. Although this disclosure can reference aspects of these standard(s), the disclosure is in no way limited by these standard(s).

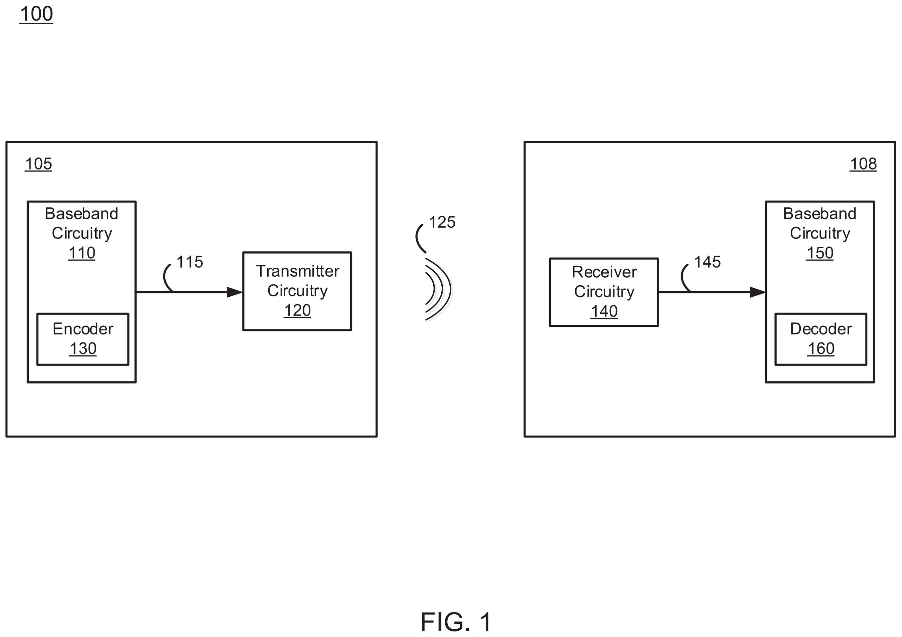

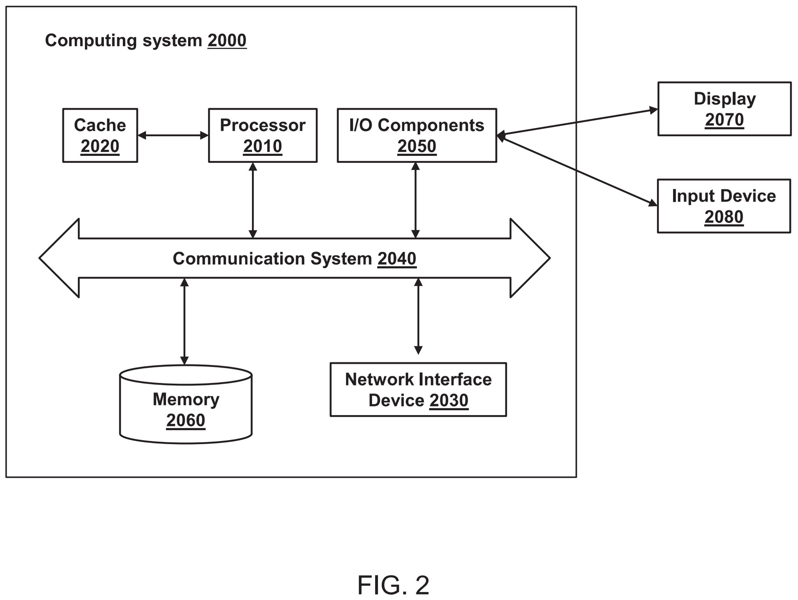

Referring to FIG. 1, illustrated is a diagram depicting an example communication environment 100 including communication systems (or communication apparatuses) 105, 108, according to one or more embodiments. In one embodiment, the communication system 105 includes a baseband circuitry 110 and a transmitter circuitry 120, and the communication system 108 includes a baseband circuitry 150 and a receiver circuitry 140. In one aspect, the communication system 105 is considered a transmitter communication system, and the communication system 108 is considered a receiver communication system. These components operate together to exchange data (e.g., messages or frames) through a wireless medium. These components are embodied as application specific integrated circuit (ASIC), field programmable gate array (FPGA), or any combination of these, in one or more embodiments. In some embodiments, the communication systems 105, 108 include more, fewer, or different components than shown in FIG. 1. For example, each of the communication systems 105, 108 includes transceiver circuitry to allow bi-directional communication between the communication systems 105, 108 or with other communication systems. In some embodiments, each of the communication systems 105, 108 may have configuration similar to that of a computing system 2000 as shown in FIG. 2.

The baseband circuitry 110 of the communication system 105 is a circuitry that generates the baseband data 115 for transmission. The baseband data 115 includes information data (e.g., signal(s)) at a baseband frequency for transmission. In one approach, the baseband circuitry 110 includes an encoder 130 that encodes the data, and generates or outputs parity bits. The parity bits (or parity data) associated with a set of bits refer to an error-detecting code that indicates whether the total number of 1-bits in the set of bits is even or odd. In one aspect, the baseband circuitry 110 (or encoder 130) obtains a generator matrix or a parity check matrix, or uses a previously produced generator matrix or a previously produced parity check matrix, and encodes the information data by applying the information data to the generator matrix or the parity check matrix to obtain a codeword. In some embodiments, the baseband circuitry 110 stores one or more generator matrices or one or more parity check matrices that conform to any IEEE 802.11 standard for WLAN communication. The baseband circuitry 110 retrieves the stored generator matrix or the stored parity check matrix in response to detecting information data to be transmitted, or in response to receiving an instruction to encode the information data. In one approach, the baseband circuitry 110 generates the parity bits according to a portion of the generator matrix or using the parity check matrix, and appends the parity bits to information bits to form a codeword. The information bits refer to any binary data inputted to an encoder to produce binary encoded data based on the binary input data. The baseband circuitry 110 generates the baseband data 115 including the codeword for the communication system 108, and provides the baseband data 115 to the transmitter circuitry 120.

The transmitter circuitry 120 of the communication system 105 includes or corresponds to a circuitry that receives the baseband data 115 from the baseband circuitry 110 and transmits a wireless signal 125 according to the baseband data 115. In one configuration, the transmitter circuitry 120 is coupled between the baseband circuitry 110 and an antenna (not shown). In this configuration, the transmitter circuitry 120 up-converts the baseband data 115 from the baseband circuitry 110 onto a carrier signal to generate the wireless signal 125 at an RF frequency (e.g., 10 MHz to 60 GHz), and transmits the wireless signal 125 through the antenna.

The receiver circuitry 140 of the communication system 108 is a circuitry that receives the wireless signal 125 from the communication system 105 and obtains baseband data 145 from the received wireless signal 125. In one configuration, the receiver circuitry 140 is coupled between the baseband circuitry 150 and an antenna (not shown). In this configuration, the receiver circuitry 140 receives the wireless signal 125 though an antenna, and down-converts the wireless signal 125 at an RF frequency according to a carrier signal to obtain the baseband data 145 from the wireless signal 125. The receiver circuitry 140 then provides the baseband data 145 to the baseband circuitry 150.

The baseband circuitry 150 of the communication system 108 includes or corresponds to a circuitry that receives the baseband data 145 from the receiver circuitry 140 and obtains information data from the received baseband data 145. In one embodiment, the baseband circuitry 150 includes a decoder 160 that extracts information and parity bits from the baseband data 145. The decoder 160 decodes the baseband data 145 to obtain the information data generated by the baseband circuitry 110 of the communication system 105.

In some embodiments, each of the baseband circuitry 110 (including the encoder 130), the transmitter circuitry 120, the receiver circuitry 140, and the baseband circuitry 150 (including the decoder 160) may be as one or more processors, application specific integrated circuit (ASIC), field programmable gate array (FPGA), or any combination of them.

FIG. 2 is a schematic block diagram of a computing system, according to an embodiment. An illustrated example computing system 2000 includes one or more processors 2010 in direct or indirect communication, via a communication system 2040 (e.g., bus), with memory 2060, at least one network interface controller 2030 with network interface port for connection to a network (not shown), and other components, e.g., input/output ("I/O") components 2050. Generally, the processor(s) 2010 will execute instructions (or computer programs) received from memory. The processor(s) 2010 illustrated incorporate, or are connected to, cache memory 2020. In some instances, instructions are read from memory 2060 into cache memory 2020 and executed by the processor(s) 2010 from cache memory 2020. The computing system 2000 may not necessarily contain all of these components shown in FIG. 2, and may contain other components that are not shown in FIG. 2.

In more detail, the processor(s) 2010 may be any logic circuitry that processes instructions, e.g., instructions fetched from the memory 2060 or cache 2020. In many implementations, the processor(s) 2010 are microprocessor units or special purpose processors. The computing device 2050 may be based on any processor, or set of processors, capable of operating as described herein. The processor(s) 2010 may be single core or multicore processor(s). The processor(s) 2010 may be multiple distinct processors.

The memory 2060 may be any device suitable for storing computer readable data. The memory 2060 may be a device with fixed storage or a device for reading removable storage media. Examples include all forms of volatile memory (e.g., RAM), non-volatile memory, media and memory devices, semiconductor memory devices (e.g., EPROM, EEPROM, SDRAM, and flash memory devices), magnetic disks, magneto optical disks, and optical discs (e.g., CD ROM, DVD-ROM, or Blu-Ray® discs). A computing system 2000 may have any number of memory devices 2060.

The cache memory 2020 is generally a form of computer memory placed in close proximity to the processor(s) 2010 for fast read times. In some implementations, the cache memory 2020 is part of, or on the same chip as, the processor(s) 2010. In some implementations, there are multiple levels of cache 2020, e.g., L2 and L3 cache layers.

The network interface controller 2030 manages data exchanges via the network interface (sometimes referred to as network interface ports). The network interface controller 2030 handles the physical and data link layers of the OSI model for network communication. In some implementations, some of the network interface controller's tasks are handled by one or more of the processor(s) 2010. In some implementations, the network interface controller 2030 is part of a processor 2010. In some implementations, the computing system 2000 has multiple network interfaces controlled by a single controller 2030. In some implementations, the computing system 2000 has multiple network interface controllers 2030. In some implementations, each network interface is a connection point for a physical network link (e.g., a cat-5 Ethernet link). In some implementations, the network interface controller 2030 supports wireless network connections and an interface port is a wireless (e.g., radio) receiver or transmitter (e.g., for any of the IEEE 802.11 protocols, near field communication "NFC", Bluetooth, ANT, or any other wireless protocol). In some implementations, the network interface controller 2030 implements one or more network protocols such as Ethernet. Generally, a computing device 2050 exchanges data with other computing devices via physical or wireless links through a network interface. The network interface may link directly to another device or to another device via an intermediary device, e.g., a network device such as a hub, a bridge, a switch, or a router, connecting the computing device 2000 to a data network such as the Internet.

The computing system 2000 may include, or provide interfaces for, one or more input or output ("I/O") devices. Input devices include, without limitation, keyboards, microphones, touch screens, foot pedals, sensors, MIDI devices, and pointing devices such as a mouse or trackball. Output devices include, without limitation, video displays, speakers, refreshable Braille terminal, lights, MIDI devices, and 2-D or 3-D printers.

Other components may include an I/O interface, external serial device ports, and any additional co-processors. For example, a computing system 2000 may include an interface (e.g., a universal serial bus (USB) interface) for connecting input devices, output devices, or additional memory devices (e.g., portable flash drive or external media drive). In some implementations, a computing device 2000 includes an additional device such as a co-processor, e.g., a math co-processor can assist the processor 2010 with high precision or complex calculations.

The components 2090 may be configured to connect with external media, a display 2070, an input device 2080 or any other components in the computing system 2000, or combinations thereof. The display 2070 may be a liquid crystal display (LCD), an organic light emitting diode (OLED) display, a flat panel display, a solid state display, a cathode ray tube (CRT) display, a projector, a printer or other now known or later developed display device for outputting determined information. The display 2070 may act as an interface for the user to see the functioning of the processor(s) 2010, or specifically as an interface with the software stored in the memory 2060.

The input device 2080 may be configured to allow a user to interact with any of the components of the computing system 2000. The input device 2080 may be a plurality pad, a keyboard, a cursor control device, such as a mouse, or a joystick. Also, the input device 2080 may be a remote control, touchscreen display (which may be a combination of the display 2070 and the input device 2080), or any other device operative to interact with the computing system 2000, such as any device operative to act as an interface between a user and the computing system 2000.

In one aspect, the UHR study group within the IEEE 802.11 working group is dedicated to exploring PHY and MAC technologies aimed at enhancing the reliability of WLAN connectivity. As part of its initiatives, UHR (802.11bn) is proposing the addition of new modulation coding scheme (MCS) numbers (or MCS values or MCS indexes). The MCS in existing Wi-Fi standards (e.g., EHT-SIG (Extremely High Throughput Signal) or Wi-Fi 7) supports values from 0 to 15, requiring 4 bits for representation. The MCS numbers refer to numbers, values, indexes, or identifiers that identify modulation schemes and/or coding schemes that are used to send data from wireless devices, or identify sets of MCS parameters including at least one of a modulation type, a code rate, a data rate, the number of spatial streams, a channel width, or a guard interval.

The current 4-bit representation is insufficient for new MCS numbers in forthcoming Wi-Fi standards (e.g., UHR or Wi-Fi 8). In one approach, adding new MCS numbers involves a process of determining or designing a new MCS number format. The new MCS number format may need an expansion from the current 4-bit MCS format in the EHT-SIG to a 5-bit format. The new MCS number format may need to facilitate a modular and gradual addition of new MCS numbers.

To address these problems, according to certain aspects, embodiments in the present disclosure relate to a technique to determine a fractional representation (or format) of a modulation coding scheme (MCS) number, and/or select MCS parameters based on a fractional representation of an MCS number. In some implementations, four additional MCS numbers can be added to the existing MCS numbers (e.g., MCS numbers in existing Wi-Fi standards) using a 5-bit representation. As the number of MCS numbers increases over time, more MCS numbers can be added to the existing MCS numbers using the 5-bit representation.

In some implementations, an MCS number format (e.g., UHR MCS number format) can be extended to represent fractional numbers (or fractional values). In some implementations, the MCS number format can be a Q number format or a Q notation. The Q notation refers to a way to specify the parameters of a binary fixed point number format. For example, the number format denoted by "Qm.n" indicates that fixed point numbers in this format have $m$ bits for the integer part and $n$ bits for the fraction part (m, n are integers).

In some implementations, a 5-bit MCS number format (or representation) can allow additional MCS numbers to be incorporated without disrupting existing designs and prior MCS numbers. In some implementations, MCS logic (e.g., MCS parameter selector circuitry) can receive an MCS number and output a set of MCS parameters (e.g., code rate, quadrature amplitude modulation (QAM) size, data rate, etc.) corresponding to the MCS number. In some implementations, a system (e.g., communication system 105, 108) can include new MCS logic (e.g., MCS circuitry for a new 5-bit MCS number format) by replicating existing MCS logic (e.g., MCS circuitry for a prior 4-bit MCS number format), along with control logic (e.g., control circuitry) based on the most significant bit (MSB) (e.g., 5th bit in a 5-bit MCS number format). This approach can ensure that all existing MCS numbers remain unchanged. For example, in response to receiving an existing MCS number (e.g., non-UHR or pre-UHR MCS numbers), the new MCS logic can read only the four least significant bits (LSB) of the MCS number and proceed with further processing. In some implementations, the new MCS logic and/or the control logic can be implemented in an MCS table. In some implementations, the new MCS logic and/or the control logic can be implemented in software, firmware, processors, circuitry, and/or a combination thereof.

In some implementations, the new MCS logic can be hardware-friendly, allowing the existing hardware (e.g., hardware corresponding to the existing MCS logic) to remain unchanged while accommodating new MCS numbers with minimal modifications. In some implementations, the existing MCS logic can remain unchanged, with the new MCS logic for additional MCS numbers being added separately. This approach can enable a modular design and an easy integration of new MCS numbers without affecting the existing hardware, making the integration more efficient and cost-effective.

In some implementations, additional (new) MCS numbers can be represented using 5 bits, maintaining the existing four-bit structure and adding a new bit for the new MCS numbers. In some implementations, the transition from four bits to five bits can preserve the existing MCS numbers (0 to 15) by setting the new bit to 0, while new MCS numbers can have the new bit set to 1. In some implementations, the mapping and representation of new MCS numbers can use a fractional representation to indicate characteristics relating to the new MCS numbers (e.g., effective data rate, spectral efficiency, error vector magnitude (EVM), etc.). The effective data rate refers to an actual rate at which data is successfully transmitted over a wireless network, taking into account various factors such as signal quality, interference, and/or network congestion. The spectral efficiency refers to the ability or characteristic of a wireless communication system measured in bits per second per hertz (bps/Hz), the ability or characteristic to transmit data over a given bandwidth in a way that maximizes the use of the available spectrum, or the ability or characteristic to efficiently utilize the frequency spectrum. The EVM refers to a measure representing the deviation of the received signal from the ideal constellation points, or any measure representing the difference between the ideal signal and the actual transmitted signal.

For example, as the MCS numbers increase, the corresponding effective data rates (or spectral efficiency or EVM) can also increase. In some implementations, new MCS numbers can be represented as fractions between existing MCS numbers. For example, a MCS number whose effective data rate lies between the effective data rate corresponding to the MCS number 1 and the effective data rate corresponding to the MCS number 2 can be represented as 1.5 between 1 and 2. A MCS number whose effective data rate lies between the effective data rate corresponding to the MCS number 2 and the effective data rate corresponding to the MCS number 3 can be represented as 2.5 between 2 and 3.

In some implementations, given an existing MCS number, a new MCS number in a 5-bit MCS format can include a new bit (or control bit or fractional bit or extra bit) and existing 4 bits corresponding the existing MCS number. In some implementations, the new bit of the new MCS number can be set to 1, while the existing four bits of the new MCS remain unchanged (e.g., the same as the 4 bits of the existing MCS number), thereby allowing for a clear distinction between the existing MCS number and the new MCS number. In this manner, all existing MCS numbers (e.g., pre-UHR MCS numbers) can be represented in the 5-bit MCS format, represented as integers from 0 to 15.

In some implementations, the 5-bit MCS format can include a control bit to append additional MCS numbers. In some implementations, the control bit is the most significant bit (MSB) of a plurality of bits. In some implementations, the 5-bit MCS format can add up to 16 new MCS numbers compared with the 4-bit MCS format. In some implementations, a new MCS number in the 5-bit MCS format can be positioned between existing MCS numbers (in the 4-bit MCS format), including one at the highest data rate (e.g., the existing MCS number of 13 corresponding to the highest data rate of 10.0 bps in the pre-UHR 4-bit MCS format). In some implementations, an MCS format can extend the MCS numbering by including one or more fractional bits (e.g., new bits, control bits, extra bits), so that the spectral efficiency (bps/Hz) can be set monotonically as the MCS number increases. In some implementations, an MCS format can provide a pathway for future expansion by adding extra bits to the MSB, thereby doubling the resolution with each extra bit. For instance, a 6-bit MCS format can maintain an MCS resolution of 0.25, while a 5-bit MCS format offers or provides a resolution of 0.5.

In some implementations, new MCS numbering (e.g., UHR MCS numbering) can extend the existing MCS numbering (e.g., pre-UHR MCS numbering) to include fractional numbers, while all the existing MCS numbers remain unchanged as integers from 0 to 15. This approach can enable the insertion of new MCS numbers (e.g., MCS values, MCS indexes, MCS levels) between the existing ones. For example, an MCS number of "m.5" (where m is an integer in a range from 0 to 15) can yield an effective data rate between the effective data rates of pre-UHR MCS numbers m and m+1.

In some implementations, mapping of new MCS numbers using fractional numbers can ensure consistency in the spectral efficiency, effective data rate, and/or EVM, such that the new MCS numbers can fit seamlessly between the existing MCS numbers in terms of the spectral efficiency, effective data rate, and/or EVM. This fractional number approach can aligns well with the ordering of the spectral efficiency, effective data rate, and/or EVM across the MCS range as in the existing MCS numbering (e.g., pre-UHR MCS numbering). In some implementations, an equivalent integer mapping can ensure that all the existing MCS numbers (e.g., pre-UHR numbers) remain unchanged. In some implementations, a fractional MCS number "m.5" (where m is an integer in a range from 0 to 15) can map to "16+floor(m.5)". For example, an MCS number 1.5 can map to 17.

In some implementations, a system (e.g., a communication system, a transmitter system) can include a (MCS) parameter selector, a forward error correction (FEC) manager, a modulator (MOD), and/or an orthogonal frequency division multiplexing access (OFDMA) manager. Each of the MCS parameter selector, FEC manager, modulator, and OFDMA manager can be implemented in software, firmware, hardware circuitry, one or more processors, or a combination thereof.

In some implementations, the parameter selector can receive an MCS number (e.g., MCS index, MCS value, MCS identifier) and output a set of MCS parameters (e.g., a modulation type, a modulation size such as QAM size, a code rate, a data rate, the number of spatial streams, a channel width, or a guard interval). The modulation size refers to a QAM size or the number of distinct symbols that can be transmitted using a particular modulation scheme (e.g., particular QAM scheme). In some implementations, the parameter selector can identify or obtain a set of MCS parameters using a table (e.g., MCS table) that stores information on relationship between MCS numbers and corresponding sets of MCS parameters. In some implementations, the parameter selector can provide one or more coding parameters (e.g.,. a code rate) to the FEC manager, one or more modulation parameters (e.g.,. a modulation size or QAM size, a data rate) to the modulator, and/or one or more channel parameters (e.g., a channel width) to the OFDMA manager.

In some implementations, in response to receiving a data payload, the FEC manager can encode the data payload using the one or more coding parameters to generate encoded data. In some implementations, the FEC manager may encode the data payload using Low-Density Parity-Check (LDPC) codes. In some implementations, the modulator can modulate the encoded data using the one or more modulation parameters to generate modulated data. In some implementations, the OFDMA manager can perform a channel modulation using the one or more channel parameters on the modulated data to define, allocate, or configure resource units (RUs). A resource unit refers to a group of subcarriers or tones within a OFDMA channel, or any frequency bandwidth unit within a frequency bandwidth of a communication channel or a communication system. In some implementations, the system (e.g., transmitter) can transmit the modulated data as one or more frames using the defined, allocated or configured RUs.

In some implementations, a 5-bit MCS format can treat or use the most significant bit (MSB), e.g., bit-5 or $b_4$, as a fractional bit. In some implementations, the 5-bit MCS format having one fractional bit can be denoted by Q4,1 or B(4,1). This design or approach can allow for a possible range of MCS numbers within the 5-bit MCS format. Additionally, the design can facilitate the potential expansion of up to 16 more MCS numbers, providing greater flexibility and scalability for future enhancements. For example, the 5-bit MCS format can include 5 bits denoted by $b_i$ (i=0, 1, ..., 4), which include the integer part IP and the fractional part FP as follows:

$$IP = \sum_{i=0}^{3}(2^i b_i)\ldots\ldots\ldots (\text{Equation 1}).$$

$$FP = b_4 \ldots\ldots\ldots (\text{Equation 2}).$$

In some implementations, from the 5-bit MCS format, an MCS number in a standard integer form (format) u (also denoted by MCS (int) or nMCS) can be obtained or calculated as follows:

$$u = \sum_{i=0}^{4}(2^i\, b_i)\ldots\ldots\ldots \text{ (Equation 3).}$$

In some implementations, from the 5-bit MCS format, an MCS number in a float form v (also denoted by Q4,1, B(4,1), or MCS (float)) can be obtained or calculated as follows:

$$v = \sum_{i=0}^{3}(2^i\, b_i) + \frac{1}{2}b_4 \ldots\ldots\ldots \text{ (Equation 4).}$$

Table 1 shows the standard integer (MCS(int)) and the Q4,1 float number (MCS(Q4,1)) for each of 5-bit values, calculated using Equation 3 and Equation 4.

Table 1. Standard integer (MCS(int)) and Q4,1 float number (MCS(Q4,1)) in a 5-bit MCS format.

| Index | Bits (Q4,1) | MCS(int) | MCS(Q4,1) |
|---|---|---|---|
| 1 | [0, 0, 0, 0, 0] | 0 | 0.0 |
| 2 | [0, 0, 0, 0, 1] | 1 | 1.0 |
| 3 | [0, 0, 0, 1, 0] | 2 | 2.0 |
| 4 | [0, 0, 0, 1, 1] | 3 | 3.0 |
| 5 | [0, 0, 1, 0, 0] | 4 | 4.0 |
| 6 | [0, 0, 1, 0, 1] | 5 | 5.0 |
| 7 | [0, 0, 1, 1, 0] | 6 | 6.0 |
| 8 | [0, 0, 1, 1, 1] | 7 | 7.0 |
| 9 | [0, 1, 0, 0, 0] | 8 | 8.0 |
| 10 | [0, 1, 0, 0, 1] | 9 | 9.0 |
| 11 | [0, 1, 0, 1, 0] | 10 | 10.0 |
| 12 | [0, 1, 0, 1, 1] | 11 | 11.0 |
| 13 | [0, 1, 1, 0, 0] | 12 | 12.0 |
| 14 | [0, 1, 1, 0, 1] | 13 | 13.0 |
| 15 | [0, 1, 1, 1, 0] | 14 | 14.0 |
| 16 | [0, 1, 1, 1, 1] | 15 | 15.0 |
| 17 | [1, 0, 0, 0, 0] | 16 | 0.5 |
| 18 | [1, 0, 0, 0, 1] | 17 | 1.5 |
| 19 | [ 1, 0, 0, 1, 0] | 18 | 2.5 |
| 20 | [1, 0, 0, 1, 1] | 19 | 3.5 |
| 21 | [1, 0, 1, 0, 0] | 20 | 4.5 |
| 22 | [1, 0, 1, 0, 1] | 21 | 5.5 |
| 23 | [1, 0, 1, 1, 0] | 22 | 6.5 |
| 24 | [1, 0, 1, 1, 1] | 23 | 7.5 |
| 25 | [1, 1, 0, 0, 0] | 24 | 8.5 |
| 26 | [1, 1, 0, 0, 1] | 25 | 9.5 |
| 27 | [1, 1, 0, 1, 0] | 26 | 10.5 |

(continued)

| Index | Bits (Q4,1) | MCS(int) | MCS(Q4,1) |
|---|---|---|---|
| 28 | [1, 1, 0, 1, 1] | 27 | 11.5 |
| 29 | [1, 1, 1, 0, 0] | 28 | 12.5 |
| 30 | [1, 1, 1, 0, 1] | 29 | 13.5 |
| 31 | [1, 1, 1, 1, 0] | 30 | 14.5 |
| 32 | [1, 1, 1, 1, 1] | 31 | 15.5 |

In some implementations, four MCS numbers in the 5-bit MCS format can be added to the existing MCS numbers (e.g., MCS numbers for EHT/802.11be corresponding to indexes 1-16 in Table 1) to form a new MCS mapping (e.g., MCS mapping for UHR). In some implementations, MCS numbers 1.5, 3.5, 4.5, and 7.5 (corresponding to indexes 18, 20, 21, 24 in Table 1) can be added to the MCS numbers 0-15 (corresponding to indexes 1-16 in Table 1) to form a new MCS mapping. The new MCS mapping can be represented as an MCS table which shows each MCS number associated with a control bit (e.g., MSB or MCS[4]), 4-bit values (e.g., MCS[3:0]), a modulation type, a code rate, and/or effective data rate.

In some implementations, MCS number 1.5 (equivalently 17 in the integer form or integer representation) can correspond to MCS parameters (QPSK, R=2/3, bps=1.33); MCS number 3.5 (equivalently 19 in the integer form or integer representation) can correspond to MCS parameters (16-QAM, R=2/3, bps=2.67); MCS number 4.5 (equivalently 20 in the integer form or integer representation) can correspond to MCS parameters (16-QAM, R=5/6, bps=3.33); and MCS number 7.5 (equivalently 23 in the integer form or integer representation) can correspond to MCS parameters (256-QAM, R=2/3, bps=5.33). In some implementations, each of the added MCS numbers 1.5, 3.5, 4.5, and 7.5 can be strategically placed between two existing MCS numbers so that a new MCS number yields a data rate between data rates of the two existing MCS numbers. For example, MCS number 1.5 has a data rate of 1.33 which lies between 1 (i.e., the data rate of MCS number 1) and 1.5 (i.e., the data rate of MCS number 2). This approach can allow for a smooth transition and integration of new MCS numbers within the existing MCS numbers.

In some implementations, a different set of four MCS numbers in the 5-bit MCS format can be added to the existing MCS numbers (e.g., MCS numbers for EHT/802.11be corresponding to indexes 1-16 in Table 1) to form a new MCS mapping (e.g., MCS mapping for UHR). In some implementations, MCS numbers 0.5, 1.5, 3.5, and 7.5 (corresponding to indexes 17, 18, 20, 24 in Table 1) can be added to the MCS numbers 0-15 (corresponding to indexes 1-16 in Table 1) to form a new MCS mapping. In some implementations, MCS number 0.5 (equivalently 16 in the integer form or integer representation) can correspond to MCS parameters (QPSK, R=2/3, bps=0.67); MCS number 1.5 (equivalently 17 in the integer form or integer representation) can correspond to MCS parameters (QPSK, R=2/3, bps=1.33); MCS number 3.5 (equivalently 19 in the integer form or integer representation) can correspond to MCS parameters (16-QAM, R=2/3, bps=2.67); and MCS number 7.5 (equivalently 23 in the integer form or integer representation) can correspond to MCS parameters (256-QAM, R=2/3, bps=5.33). In some implementations, each of the added MCS numbers 0.5, 1.5, 3.5, and 7.5 can be strategically placed between two existing MCS numbers so that a new MCS number yields a data rate between data rates of the two existing MCS numbers. This approach can allow for a smooth transition and integration of new MCS numbers within the existing MCS numbers.

In some implementations, six MCS numbers in the 5-bit MCS format can be added to the existing MCS numbers (e.g., MCS numbers for EHT/802.11be corresponding to indexes 1-16 in Table 1) to form a new MCS mapping (e.g., MCS mapping for UHR). In some implementations, MCS numbers 0.5, 1.5, 2.5, 3.5, 4.5, and 7.5 (corresponding to indexes 17, 18, 19, 20, 21, 24 in Table 1) can be added to the MCS numbers 0-15 (corresponding to indexes 1-16 in Table 1) to form a new MCS mapping. In some implementations, MCS number 0.5 (equivalently 16 in the integer form or integer representation) can correspond to MCS parameters (QPSK, R=2/3, bps=0.67); MCS number 1.5 (equivalently 17 in the integer form or integer representation) can correspond to MCS parameters (QPSK, R=2/3, bps=1.33); MCS number 2.5 (equivalently 18 in the integer form or integer representation) can correspond to MCS parameters (QPSK, R=5/6, bps=1.67); MCS number 3.5 (equivalently 19 in the integer form or integer representation) can correspond to MCS parameters (16-QAM, R=2/3, bps=2.67); MCS number 4.5 (equivalently 20 in the integer form or integer representation) can correspond to MCS parameters (16-QAM, R=5/6, bps=3.33); and MCS number 7.5 (equivalently 23 in the integer form or integer representation) can correspond to MCS parameters (256-QAM, R=2/3, bps=5.33). In some implementations, each of the added MCS numbers 0.5, 1.5, 2.5, 3.5, 4.5, and 7.5 can be strategically placed between two existing MCS numbers so that a new MCS number yields a data rate between data rates of the two existing MCS numbers. This approach can allow for a smooth transition and integration of new MCS numbers within the existing MCS numbers.

In some implementations, eight MCS numbers in the 5-bit MCS format can be added to the existing MCS numbers (e.g., MCS numbers for EHT/802.11be corresponding to indexes 1-16 in Table 1) to form a new MCS mapping (e.g., MCS mapping for UHR). In some implementations, MCS numbers 0.5, 1.5, 2.5, 3.5, 4.5, 7.5, 11.5 and 13.5 (corresponding to indexes 17, 18, 19, 20, 21, 24, 28, 30 in Table 1) can be added to the MCS numbers 0-15 (corresponding to indexes 1-16 in Table 1) to form a new MCS mapping. In some implementations, MCS number 0.5 (equivalently 16 in the integer form or integer representation) can correspond to MCS parameters (QPSK, R=2/3, bps=0.67); MCS number 1.5 (equivalently 17 in the integer form or integer representation) can correspond to MCS parameters (QPSK, R=2/3, bps=1.33); MCS number 2.5 (equivalently 18 in the integer form or integer representation) can correspond to MCS parameters (QPSK, R=5/6, bps=1.67); MCS number 3.5 (equivalently 19 in the integer form or integer representation) can correspond to MCS parameters (16-QAM, R=2/3, bps=2.67); MCS number 4.5 (equivalently 20 in the integer form or integer representation) can correspond to MCS parameters (16-QAM, R=5/6, bps=3.33); MCS number 7.5 (equivalently 23 in the integer form or integer representation) can correspond to MCS parameters (256-QAM, R=2/3, bps=5.33); MCS number 11.5 (equivalently 27 in the integer form or integer representation) can correspond to MCS parameters (1K-QAM, R=7/8, bps=8.75); and MCS number 13.5 (equivalently 29 in the integer form or integer representation) can correspond to MCS parameters (4K-QAM, R=7/8, bps=10.5). In some implementations, each of the added MCS numbers 0.5, 1.5, 2.5, 3.5, 4.5, 7.5, 11.5 and 13.5 can be strategically placed between two existing MCS numbers so that a new MCS number yields a data rate between data rates of the two existing MCS numbers. This approach can allow for a smooth transition and integration of new MCS numbers within the existing MCS numbers.

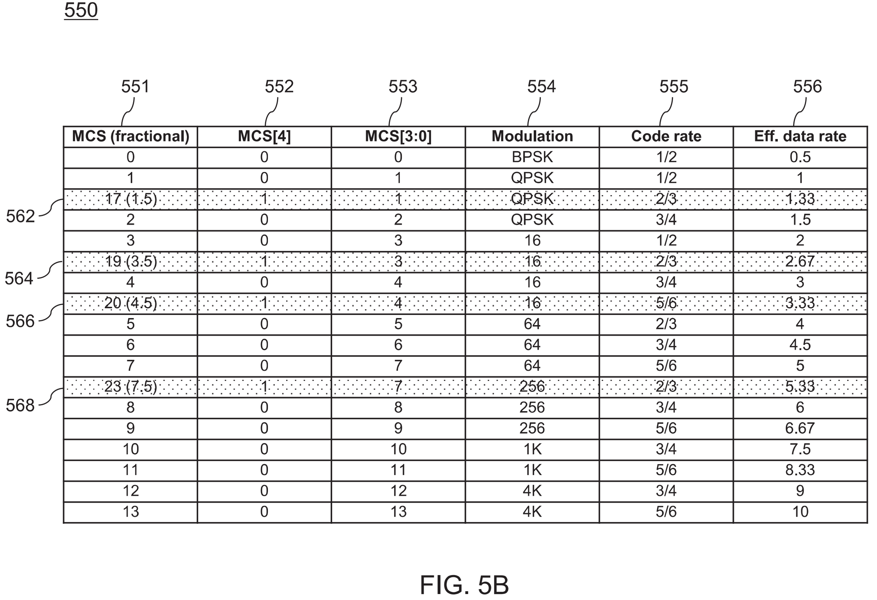

In some implementations, a (MCS) parameter selector can include a first parameter selector including a first MCS logic, a second MCS logic, and a 2x1 multiplexer. In some implementations, the parameter selector can receive an MCS number $b_i$ (i=0,1, ..., 4) in a 5-bit MCS format including an MSB $b_4$. In some implementations, the first MCS logic can be pre-UHR MCS logic or 4-bit MCS logic. In some implementations, the second MCS logic can be UHR additional MCS logic or 5-bit MCS logic. In some implementations, the parameter selector can provide the MSB $b_4$ to the 2x1 multiplexer, and a 4-bit MCS number $b_i$ (i=0,1,2,3) to the first parameter selector. In some implementations, the first parameter selector can receive the 4-bit MCS number $b_i$ (i=0,1,2,3), calculate a first set of MCS parameters using the first MCS logic, and provide the first set of MCS parameters to the 2x1 multiplexer. In some implementations, the first MCS logic can be implemented using a table (e.g., a table for the 4-bit MCS format having a table structure similar to that of the table shown in FIG. 5B). In some implementations, the parameter selector can calculate a second set of MCS parameters corresponding to the 4-bit MCS number $b_i$ (i=0,1,2,3) using the second MCS logic, and provide the second set of MCS parameters to the 2x1 multiplexer. In some implementations, the second MCS logic can be implemented using a table (e.g., a table for the 5-bit MCS format similar to the table shown in FIG. 5B). In some implementations, the 2x1 multiplexer can determine whether the MSB $b_4$ equals 0 or 1. In response to determining that the MSB $b_4$ equals 0, the 2x1 multiplexer can generate, as an output, the first set of MCS parameters. In response to determining that the MSB $b_4$ equals 1, the 2x1 multiplexer can generate, as the output, the second set of MCS parameters.

The 5-bit MCS format or 5-bit fractional MCS representation can offer several advantages. The existing 4-bit MCS logic (e.g., the first MCS logic), which may predate UHR, can remain unchanged. New MCS logic (e.g., the second MCS logic) can be added by adhering to the same bit-width rules. Such pre-UHR MCS logic and additional (new) MCS logic can be seamlessly integrated using control logic based on the MSB of the 5-bit MCS representation. With the fractional MCS representation, the MCS number versus spectral efficiency behavior can be kept similar to pre-UHR MCS logic. The 5-bit MCS format can allow for a modular hardware design. Given that MCS logic is connected to many blocks in the system, a modular hardware design can avoid significant design verification (DV) cycles.

In some implementations, a (MCS) parameter selector can include a first parameter selector including a first MCS logic, a second MCS logic, a third MCS logic, a first 2x1 multiplexer, and a second 2x1 multiplexer. In some implementations, the parameter selector can receive an MCS number $b_i$ (i=0,1, ..., 5) in a 6-bit MCS format including an MSB $b_5$ and a second MSB $b_4$. In some implementations, the first MCS logic can be pre-UHR MCS logic or 4-bit MCS logic. In some implementations, the second MCS logic can be UHR additional MCS logic or 5-bit MCS logic. In some implementations, the third MCS logic can be 6-bit MCS logic.

In some implementations, the parameter selector can provide the MSB $b_5$ to the second 2x1 multiplexer, provide the second MSB $b_4$ to the first 2x1 multiplexer, and a 4-bit MCS number $b_i$ (i=0,1,2,3) to the first parameter selector. In some implementations, the first parameter selector can receive the 4-bit MCS number $b_i$ (i=0,1,2,3), calculate a first set of MCS parameters using the first MCS logic, and provide the first set of MCS parameters to the first 2x1 multiplexer. In some implementations, the first MCS logic can be implemented using a table (e.g., a table for the 4-bit MCS format having a table structure similar to that of the table shown in FIG. 5B). In some implementations, the parameter selector can calculate a second set of MCS parameters corresponding to the 4-bit MCS number $b_i$ (i=0,1,2,3) using the second MCS logic, and provide the second set of MCS parameters to the first 2x1 multiplexer. In some implementations, the second MCS logic can be implemented using a table (e.g., a table for the 5-bit MCS format similar to the table shown in FIG. 5B). In some implementations, the first 2x1 multiplexer can determine whether the second MSB $b_4$ equals 0 or 1. In response to determining that the second MSB $b_4$ equals 0, the first 2x1 multiplexer can generate, as an output, the first set of MCS parameters. In response to determining that the MSB $b_4$ equals 1, the first 2x1 multiplexer can generate, as the output, the second set of MCS parameters.

In some implementations, the parameter selector can calculate a third set of MCS parameters corresponding to the 4-bit MCS number $b_i$ (i=0,1,2,3) using the third MCS logic, and provide the third set of MCS parameters to the second 2x1 multiplexer. In some implementations, the third MCS logic can be implemented using a table (e.g., a table for the 6-bit MCS format having a table structure similar to that of the table shown in FIG. 5B). In some implementations, the second 2x1 multiplexer can determine whether the MSB $b_5$ equals 0 or 1. In response to determining that the MSB $b_5$ equals 0, the second 2x1 multiplexer can generate, as an output, the output of the first 2x1 multiplexer. In response to determining that the MSB $b_5$ equals 1, the second 2x1 multiplexer can generate, as the output, the third set of MCS parameters.

In some implementations, the 5-bit MCS format or 5-bit fractional MCS representation can provide design scalability for the addition of more MCS numbers in a 6-bit MCS format within the design and/or implementation of the 5-bit MCS format (e.g., UHR design and/or implementation of 5-bit MCS format). By expanding to the -bit MCS format, the same add-on control logic can be followed, facilitating the integration of additional MCS numbers seamlessly. This approach can ensure that the system can accommodate future enhancements without significant modifications to the existing framework or implementation.

Embodiments in the present disclosure have at least the following advantages and benefits. First, embodiments in the present disclosure can provide useful techniques for designing or implementing a five-bit MCS format which represents additional MCS numbers while maintaining the existing four-bit MCS format. By adding a new bit (e.g., control bit, extra bit) for the new MCS numbers, the five-bit MCS format can ensure the retention of monotonicity in both spectral efficiency and error vector magnitude (EVM). This approach can allow for a seamless integration of new MCS numbers without disrupting the existing framework (e.g., 4-bit MCS format).

Second, embodiments in the present disclosure can provide useful techniques for implementing a hardware-friendly MCS format, ensuring that the existing hardware remains unchanged while accommodating new (additional) MCS numbers with minimal modifications. This approach can leverage the hardware advantage by allowing the existing MCS logic to remain intact while incorporating new logic for the additional MCS numbers. This approach can retain the existing MCS logic, with the new MCS logic for the additional MCS numbers being added separately, ensuring seamless integration and minimal disruption to the existing system (e.g., pre-UHR or EHT/802.11be systems).

Third, embodiments in the present disclosure can provide useful techniques for allowing for a modular and gradual addition of new MCS numbers. Such modular design can enable seamless integration of the new MCS numbers without impacting the existing hardware, thereby enhancing efficiency and cost-effectiveness.

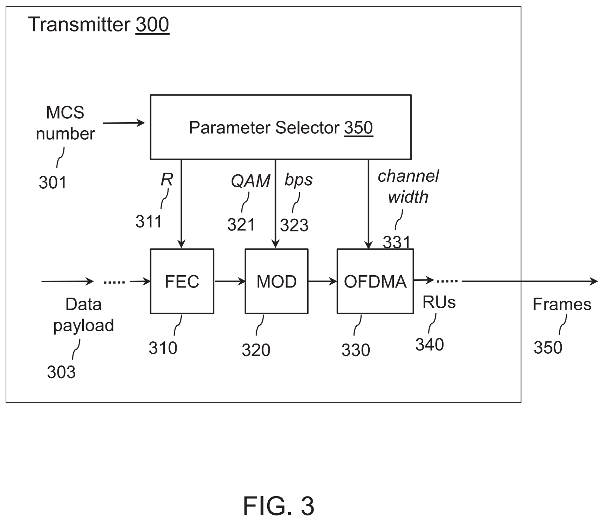

FIG. 3 is a diagram depicting a transmitter 300 including a parameter selector, according to one or more embodiments. A transmitter (e.g., communication system 105, transmitter circuitry 120) can include a (MCS) parameter selector 350, a FEC manager 310, a modulator (MOD) 320, and/or an OFDMA manager 330. Each of the MCS parameter selector 350, FEC manager 310, modulator 320, and OFDMA manager 330 can be implemented in software, firmware, hardware circuitry, one or more processors, or a combination thereof.

Referring to FIG. 3, the parameter selector 350 can receive an MCS number (e.g., MCS index, MCS value, MCS identifier) and output a set of MCS parameters (e.g., a modulation type, a modulation size such as QAM size, a code rate, a data rate, the number of spatial streams, a channel width, or a guard interval). The parameter selector 350 can identify or obtain a set of MCS parameters using a table (e.g., MCS table 550 in FIG. 5B) that stores information on relationship between MCS numbers and corresponding sets of MCS parameters. The parameter selector 350 can provide one or more coding parameters (e.g.,. a code rate ® 311) to the FEC manager 310, one or more modulation parameters (e.g.,. a modulation size or QAM size 321, a data rate (bps) 323) to the modulator 320, and/or one or more channel parameters (e.g., a channel width 331) to the OFDMA manager 330.

In response to receiving a data payload, the FEC manager 310 can encode the data payload using the one or more coding parameters to generate encoded data. The FEC manager 310 may encode the data payload using LDPC codes. The modulator 320 can modulate the encoded data using the one or more modulation parameters to generate modulated data. The OFDMA manager 330 can perform a channel modulation using the one or more channel parameters on the modulated data to define, allocate, or configure RUs. The system (e.g., transmitter 300) can transmit the modulated data as one or more frames using the defined, allocated or configured RUs.

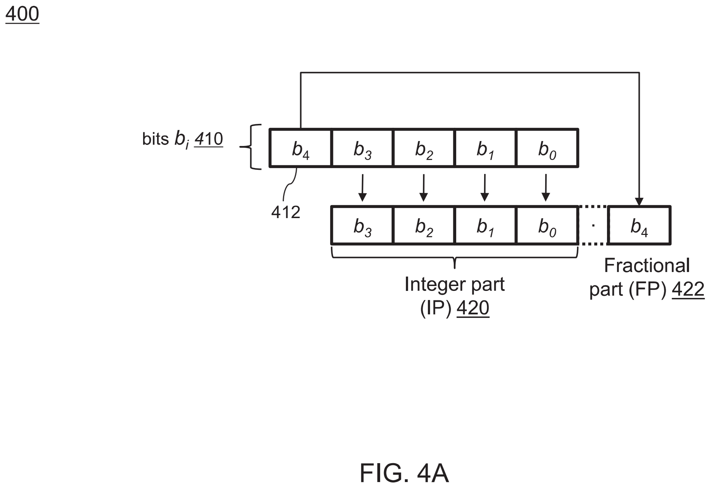

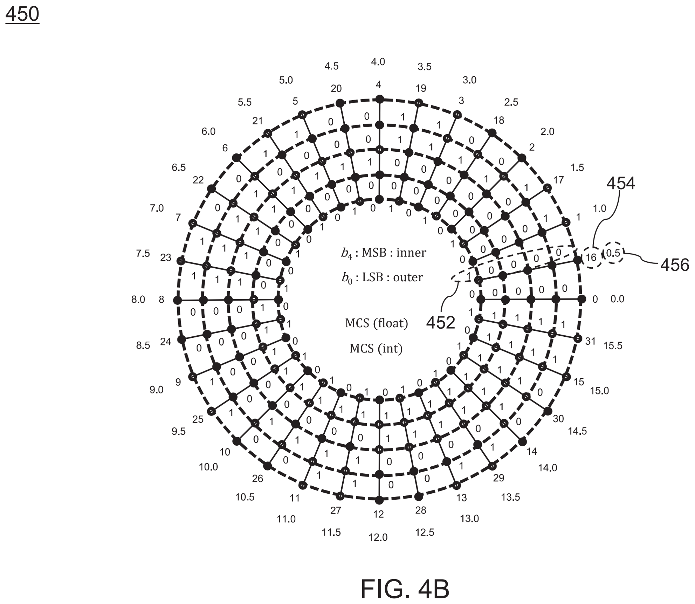

FIG. 4A and FIG. 4B are diagrams 400, 450 depicting fractional representations of MCS numbers, according to one or more embodiments. Referring to FIG. 4A, a 5-bit MCS format can treat or use the MSB 412, e.g., bit-5 or $b_4$, as a fractional bit. The 5-bit MCS format can include 5 bits denoted by $b_i$ (i=0, 1, ..., 4) 410. The 5-bits can include the integer part IP 420 (see Equation 1) and the fractional part FP 422 (Equation 2). FIG. 4B shows a graphical representation of MCS numbers corresponding to those shown in Table 1 (e.g., MCS number 0.5 in index 17). For example, in FIG. 4B, the reference numbers 452, 454, 456 indicate 5-bits values ([1 0 0 0 0]), MCS (int) 16, and MCS (float) 0.5, respectively, corresponding to the MCS number 0.5 in index 17 of Table 1.

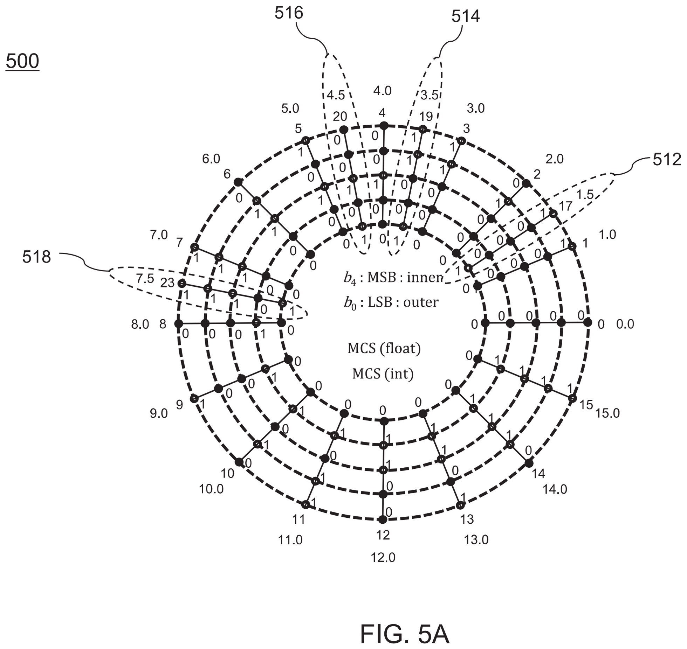

FIG. 5A to FIG. 5C are diagrams 500, 550, 580 depicting a first example set of MCS numbers (e.g., 1.5, 3.5, 4.5, 7.5), according to one or more embodiments. Four MCS numbers in the 5-bit MCS format can be added to the existing MCS numbers (e.g., MCS numbers for EHT/802.11be corresponding to indexes 1-16 in Table 1) to form a new MCS mapping (e.g., MCS mapping for UHR). MCS numbers 1.5, 3.5, 4.5, and 7.5 (corresponding to indexes 18, 20, 21, 24 in Table 1) can be added to the MCS numbers 0-15 (corresponding to indexes 1-16 in Table 1) to form a new MCS mapping. In FIG. 5A, the diagram 500 shows a graphical representation of MCS numbers including MCS numbers 1.5, 3.5, 4.5, and 7.5, denoted by the reference numbers 512, 514, 516, and 518, respectively. In FIG. 5B, the new MCS mapping can be represented as an MCS table 550 which shows each MCS number 551 associated with a control bit 552 (e.g., MSB or MCS[4]), 4-bit values 553 (e.g., MCS[3:0]), a modulation type 554, a code rate 555, and/or effective data rate 556. The MCS table 550 includes rows 562, 564, 566, 568 corresponding to MCS numbers 1.5, 3.5, 4.5, and 7.5.

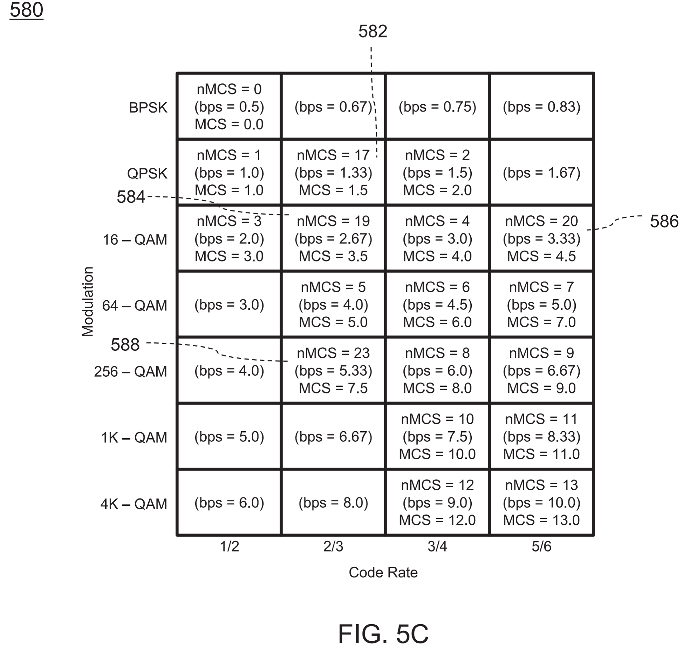

Referring to FIG. 5C, a table 580 shows modulation types, code rates, data rates (bps), integer format (nMCS) of a first example set of MCS numbers (e.g., 1.5, 3.5, 4.5, 7.5). For example, the reference number 582 indicates that MCS number 1.5 (equivalently 17 in the integer form or integer representation) can correspond to MCS parameters (QPSK, R=2/3, bps=1.33). The reference number 584 indicates that MCS number 3.5 (equivalently 19 in the integer form or integer representation) can correspond to MCS parameters (16-QAM, R=2/3, bps=2.67). The reference number 586 indicates that MCS number 4.5 (equivalently 20 in the integer form or integer representation) can correspond to MCS parameters (16-QAM, R=5/6, bps=3.33). The reference number 586 indicates that MCS number 7.5 (equivalently 23 in the integer form or integer representation) can correspond to MCS parameters (256-QAM, R=2/3, bps=5.33).

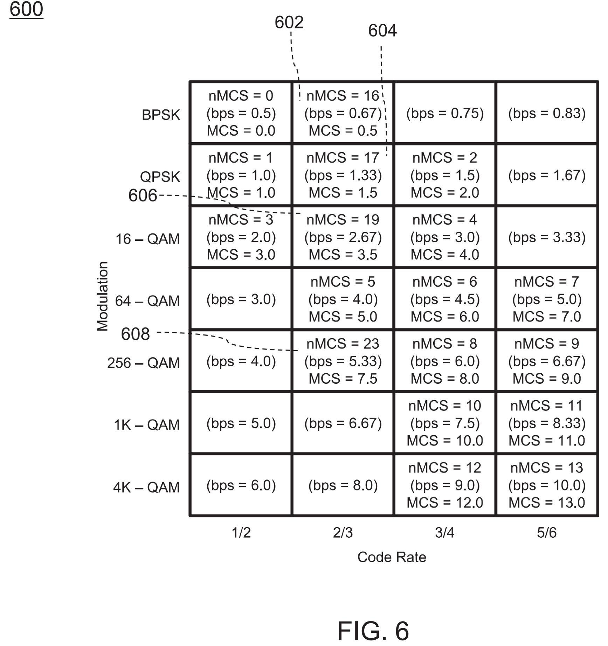

FIG. 6 shows a table 600 indicating a second example set of MCS numbers (e.g., 0.5, 1.5, 3.5, and 7.5), according to one or more embodiments. The table 600 shows modulation types, code rates, data rates (bps), integer format (nMCS) of the second example set of MCS numbers (e.g., 0.5, 1.5, 3.5, and 7.5). For example, the reference number 602 indicates that MCS number 0.5 (equivalently 16 in the integer form or integer representation) can correspond to MCS parameters (QPSK, R=2/3, bps=0.67). The reference number 604 indicates that MCS number 1.5 (equivalently 17 in the integer form or integer representation) can correspond to MCS parameters (QPSK, R=2/3, bps=1.33). The reference number 606 indicates that MCS number 3.5 (equivalently 19 in the integer form or integer representation) can correspond to MCS parameters (16-QAM, R=2/3, bps=2.67). The reference number 608 indicates that MCS number 7.5 (equivalently 23 in the integer form or integer representation) can correspond to MCS parameters (256-QAM, R=2/3, bps=5.33).

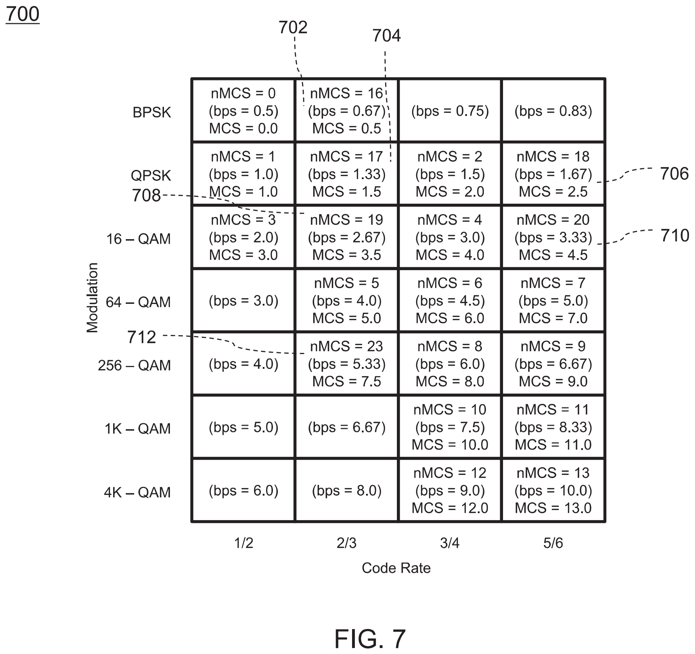

FIG. 7 shows a table 700 indicating a third example set of MCS numbers (e.g., 0.5, 1.5, 2.5, 3.5, 4.5, and 7.5), according to one or more embodiments. The table 700 shows modulation types, code rates, data rates (bps), integer format (nMCS) of the second example set of MCS numbers (e.g., 0.5, 1.5, 2.5, 3.5, 4.5, and 7.5). For example, the reference number 702 indicates that MCS number 0.5 (equivalently 16 in the integer form or integer representation) can correspond to MCS parameters (QPSK, R=2/3, bps=0.67). The reference number 704 indicates that MCS number 1.5 (equivalently 17 in the integer form or integer representation) can correspond to MCS parameters (QPSK, R=2/3, bps=1.33). The reference number 706 indicates that MCS number 2.5 (equivalently 18 in the integer form or integer representation) can correspond to MCS parameters (QPSK, R=5/6, bps=1.67). The reference number 708 indicates that MCS number 3.5 (equivalently 19 in the integer form or integer representation) can correspond to MCS parameters (16-QAM, R=2/3, bps=2.67). The reference number 710 indicates that MCS number 4.5 (equivalently 20 in the integer form or integer representation) can correspond to MCS parameters (16-QAM, R=5/6, bps=3.33). The reference number 712 indicates that MCS number 7.5 (equivalently 23 in the integer form or integer representation) can correspond to MCS parameters (256-QAM, R=2/3, bps=5.33).

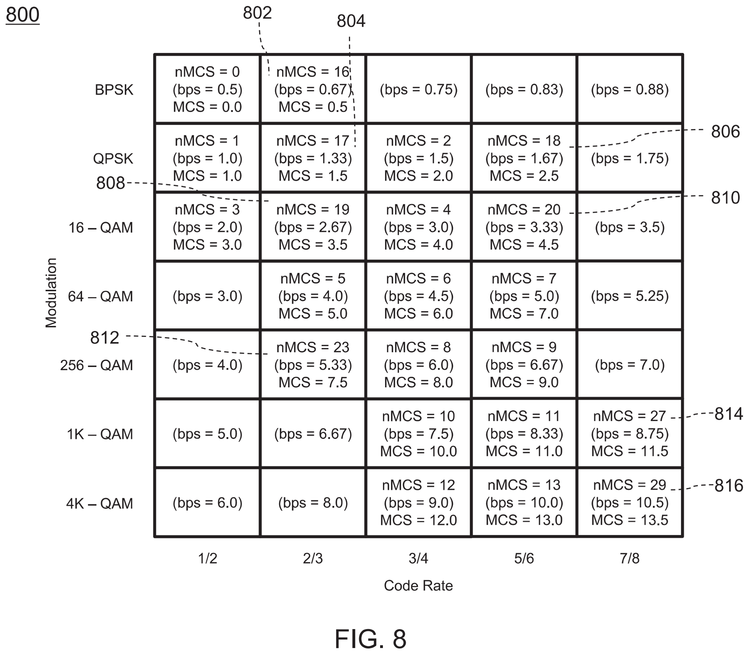

FIG. 8 shows a table 800 indicating a fourth example set of MCS numbers (e.g., 0.5, 1.5, 2.5, 3.5, 4.5, 7.5, 11.5 and 13.5), according to one or more embodiments. The table 800 shows modulation types, code rates, data rates (bps), integer format (nMCS) of the second example set of MCS numbers (e.g., 0.5, 1.5, 2.5, 3.5, 4.5, 7.5, 11.5 and 13.5). For example, the reference number 802 indicates that MCS number 0.5 (equivalently 16 in the integer form or integer representation) can correspond to MCS parameters (QPSK, R=2/3, bps=0.67). The reference number 804 indicates that MCS number 1.5 (equivalently 17 in the integer form or integer representation) can correspond to MCS parameters (QPSK, R=2/3, bps=1.33). The reference number 806 indicates that MCS number 2.5 (equivalently 18 in the or integer representation) can correspond to MCS parameters (QPSK, R=5/6, bps=1.67). The reference number 808 indicates that MCS number 3.5 (equivalently 19 in the integer form or integer representation) can correspond to MCS parameters (16-QAM, R=2/3, bps=2.67). The reference number 810 indicates that MCS number 4.5 (equivalently 20 in the integer form or integer representation) can correspond to MCS parameters (16-QAM, R=5/6, bps=3.33). The reference number 812 indicates that MCS number 7.5 (equivalently 23 in the integer form or integer representation) can correspond to MCS parameters (256-QAM, R=2/3, bps=5.33). The reference number 814 indicates that MCS number 11.5 (equivalently 27 in the integer form or integer representation) can correspond to MCS parameters (1K-QAM, R=7/8, bps=8.75). The reference number 816 indicates that MCS number 13.5 (equivalently 29 in the integer form or integer representation) can correspond to MCS parameters (4K-QAM, R=7/8, bps=10.5).

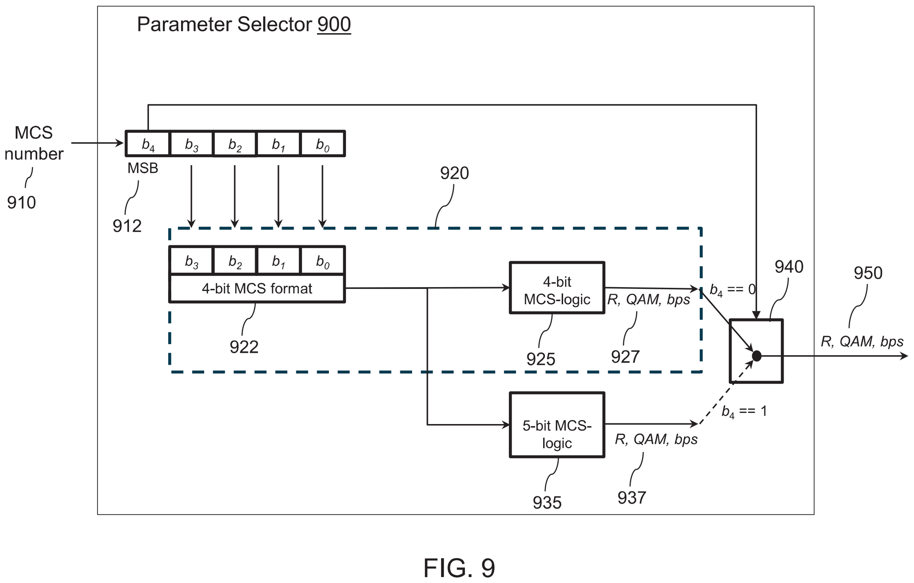

FIG. 9 is a diagram depicting an example parameter selector 900 receiving a 5-bit MCS number 910, according to one or more embodiments. The (MCS) parameter selector 900 can include a first parameter selector 920 including a first MCS logic 925, a second MCS logic 935, and a 2x1 multiplexer 940. The parameter selector 900 can receive the MCS number $b_i$ (i=0,1, ..., 4) 910 in a 5-bit MCS format including an MSB $b_4$ (912). The first MCS logic 925 can be pre-UHR MCS logic or 4-bit MCS logic. The second MCS logic 935 can be UHR additional MCS logic or 5-bit MCS logic. The parameter selector 900 can provide the MSB $b_4$ to the 2x1 multiplexer 940, and the 4-bit MCS number $b_i$ (i=0,1,2,3) 910 to the first parameter selector 920. The first parameter selector 920 can receive the 4-bit MCS number $b_i$ (i=0,1,2,3) 922, calculate a first set of MCS parameters 927 using the first MCS logic 925, and provide the first set of MCS parameters 927 to the 2x1 multiplexer 940. The first MCS logic 925 can be implemented using a table (e.g., a table for the 4-bit MCS format having a table structure similar to that of the table shown in FIG. 5B). The parameter selector 900 can calculate a second set of MCS parameters 937 corresponding to the 4-bit MCS number $b_i$ (i=0,1,2,3) 922 using the second MCS logic 935, and provide the second set of MCS parameters 937 to the 2x1 multiplexer 940. The second MCS logic 935 can be implemented using a table (e.g., a table for the 5-bit MCS format similar to the table shown in FIG. 5B). The 2x1 multiplexer 940 can determine whether the MSB $b_4$ equals 0 or 1. In response to determining that the MSB $b_4$ equals 0, the 2x1 multiplexer 940 can generate, as an output 950, the first set of MCS parameters 927. In response to determining that the MSB $b_4$ equals 1, the 2x1 multiplexer 940 can generate, as the output 950, the second set of MCS parameters 937.

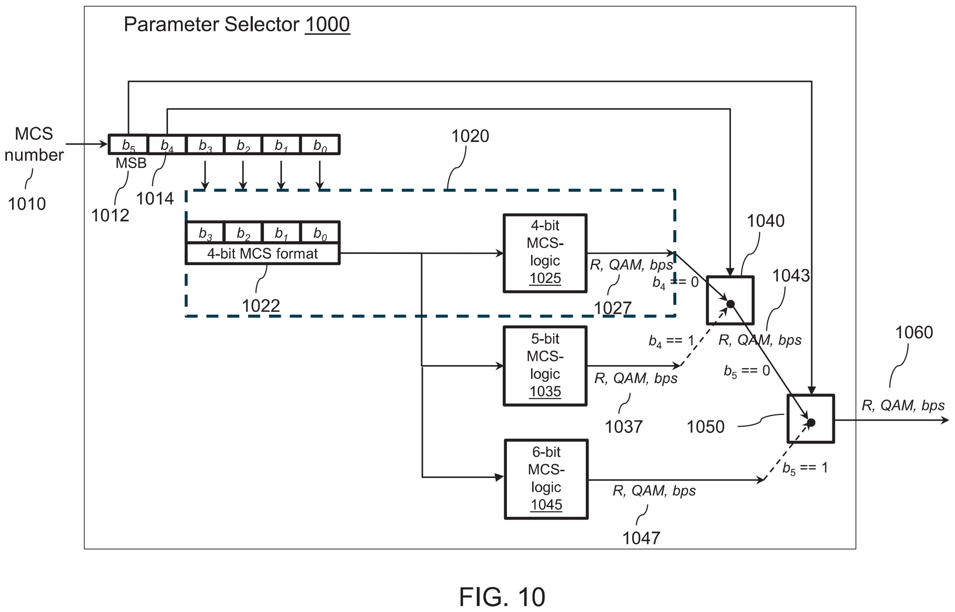

FIG. 10 is a diagram depicting another example parameter selector 1000 receiving a 6-bit MCS number 1010, according to one or more embodiments. The (MCS) parameter selector 1000 can include a first parameter selector 1020 including a first MCS logic 1025, a second MCS logic 1035, a third MCS logic 1045, a first 2x1 multiplexer 1040, and a second 2x1 multiplexer 1050. The parameter selector 1000 can receive the MCS number $b_i$ (i=0,1, ..., 5) 1010 in a 6-bit MCS format including the MSB $b_5$ (1012) and a second MSB $b_4$ (1014). The first MCS logic 1025 can be pre-UHR MCS logic or 4-bit MCS logic. The second MCS logic 1035 can be UHR additional MCS logic or 5-bit MCS logic. The third MCS logic 1045 can be 6-bit MCS logic.

Referring to FIG. 10, the parameter selector 1000 can provide the MSB $b_5$ (1012) to the second 2x1 multiplexer 1050, provide the second MSB $b_4$ (1014) to the first 2x1 multiplexer 1040, and a 4-bit MCS number $b_i$ (i=0,1,2,3) (1022) to the first parameter selector 1025. The first parameter selector 1020 can receive the 4-bit MCS number $b_i$ (i=0,1,2,3) (1022), calculate a first set of MCS parameters 1027 using the first MCS logic 1025, and provide the first set of MCS parameters 1025 to the first 2x1 multiplexer 1040. The first MCS logic 1025 can be implemented using a table (e.g., a table for the 4-bit MCS format having a table structure similar to that of the table shown in FIG. 5B). The parameter selector 1000 can calculate a second set of MCS parameters 1037 corresponding to the 4-bit MCS number $b_i$ (i=0,1,2,3) (1022) using the second MCS logic 1035, and provide the second set of MCS parameters 1037 to the first 2x1 multiplexer 1040. The second MCS logic 1035 can be implemented using a table (e.g., a table for the 5-bit MCS format similar to the table shown in FIG. 5B). The first 2x1 multiplexer 1040 can determine whether the second MSB $b_4$ (1014) equals 0 or 1. In response to determining that the second MSB $b_4$ (1014) equals 0, the first 2x1 multiplexer 1040 can generate, as an output 1043, the first set of MCS parameters 1027. In response to determining that the MSB $b_4$ equals 1, the first 2x1 multiplexer 1040 can generate, as the output 1043, the second set of MCS parameters 1037.

The parameter selector 1000 can calculate a third set of MCS parameters 1047 corresponding to the 4-bit MCS number $b_i$ (i=0,1,2,3) (1022) using the third MCS logic 1045, and provide the third set of MCS parameters 1047 to the second 2x1 multiplexer 1050. The third MCS logic 1045 can be implemented using a table (e.g., a table for the 6-bit MCS format having a table structure similar to that of the table shown in FIG. 5B). The second 2x1 multiplexer 1050 can determine whether the MSB $b_5$ (1012) equals 0 or 1. In response to determining that the MSB $b_5$ (1012) equals 0, the second 2x1 multiplexer 1050 can generate, as an output 1060, the output 1043 of the first 2x1 multiplexer 1040. In response to determining that the MSB $b_5$ (1012) equals 1, the second 2x1 multiplexer can generate, as the output 1060, the third set of MCS parameters 1047.

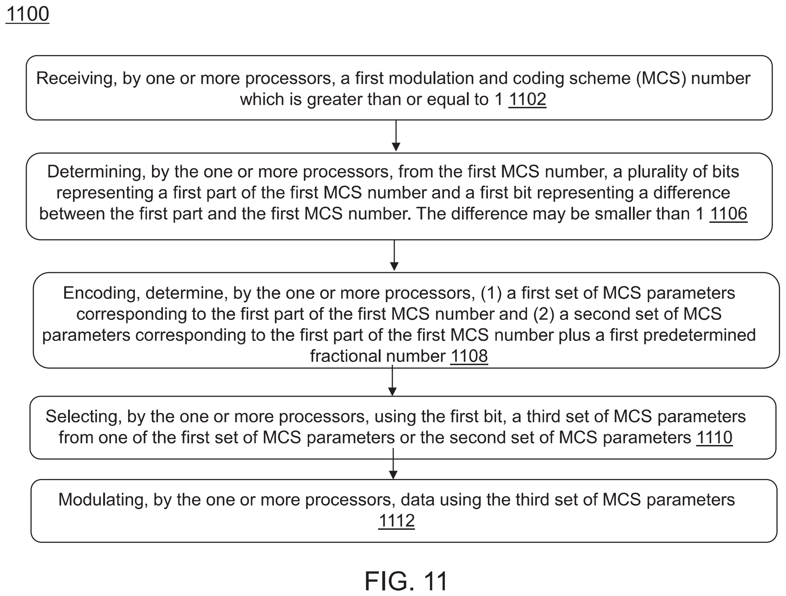

FIG. 11 is a flow diagram showing a process 1100 for selecting MCS parameters based on a fractional representation of an MCS number, in accordance with an embodiment. In some embodiments, the process 1100 is performed by one or more processors of a first device (e.g. baseband circuitry 110, transmitter circuitry 120 or processor 2010 of communication system 105, processor 2010 of communication system 108, transmitter 300, parameter selector 350, parameter selector 900, parameter selector 1000). In other embodiments, the process 1100 is performed by other entities (e.g., a computing system other than the communication system 105 or 108). In some embodiments, the process 1100 includes more, fewer, or different steps than shown in FIG. 11.

At step 1102, one or more processors may receive a first modulation and coding scheme (MCS) number (e.g., MCS number 301, MCS number 410, MCS number 910, MCS number 1010) which is greater than or equal to 1.

At step 1106, the one or more processors may determine, from the first MCS number (e.g., MCS number 1.5), a plurality of bits representing a first part of the first MCS number (e.g., integer part 922 corresponding to MCS number 1.0) and a first bit (e.g., MSB 912) representing a difference (e.g., 0.5) between the first part (e.g., 1.0) and the first MCS number (e.g., 1.5). The difference may be smaller than 1.

At step 1108, the one or more processors may determine (1) a first set of MCS parameters (e.g., parameters 927) corresponding to the first part of the first MCS number and (2) a second set of MCS parameters (e.g., parameters 937) corresponding to the first part of the first MCS number (e.g., 1.0) plus a first predetermined fractional number (e.g., 0.5).

In some implementations, the first part of the first MCS number (e.g., 1.0) plus the first predetermined fractional number (e.g., 0.5) may correspond to one of 1.5, 3.5, 4.5 or 7.5. In some implementations, the first part of the MCS number may be an integer greater than or equal to 1. The first predetermined fractional number may be 0.5. In some implementations, a spectral efficiency of the first set of MCS parameters (e.g., a spectral efficiency corresponding to the first part of the first MCS number) may be smaller than a spectral efficiency of the second set of MCS parameters (e.g., a spectral efficiency corresponding to the first part of the first MCS number plus the first predetermined fractional number).

At step 1112, the one or more processors may select, using the first bit (e.g., MSB 912), a third set of MCS parameters (e.g., parameters 950) from one of the first set of MCS parameters (e.g., parameters 927) or the second set of MCS parameters (e.g., parameters 937). In some implementations, the third set of MCS parameters (e.g., parameters 950) may include at least one of a code rate (e.g., code rate R), a modulation size (e.g., QAM size), or a data rate (e.g., effective data rate bps).

At step 1114, the one or more processors (e.g., modulator 320) may modulate data using the third set of MCS parameters.

In some implementations, the one or more processors (e.g., parameter selector 1000) may be configured to receive a second MCS number (e.g., MCS number 1010 representing a fractional MCS number 1.75) which is greater than or equal to the first MCS number (e.g., 5-bits value $[b_4, b_3, b_2, b_1, b_{01}]$ shown in FIG. 10 representing a fractional MCS number 1.5). The one or more processors may be configured to determine, from the second MCS number (e.g. MCS number 1010), a plurality of bits representing the first MCS number (e.g., 5-bits value $[b_4, b_3, b_2, b_1, b_0]$ shown in FIG. 10) and a second bit (e.g., MSB 1012) representing a difference between the first MCS number (e.g., 1.5) and the second MCS number (e.g., 1.75). The difference (e.g., 0.25) may be smaller than 1. The one or more processors may be configured to determine (1) the third set of MCS parameters (e.g., parameters 1043) corresponding to the first MCS number (e.g., 1.5) and (2) a fourth set of MCS parameters (e.g., parameters 1047) corresponding to the first MCS number (e.g., 1.5) plus a second predetermined fractional number (e.g. 0.25). The one or more processors may be configured to select, using the second bit (e.g., MSB 1012), a set of MCS parameters (e.g., parameters 1060) from one of the third set of MCS parameters (e.g., parameters 1043) or the fourth set of MCS parameters (e.g., parameters 1047). The second predetermined fractional number (e.g., 0.25) may be 0.5 times the first predetermined fractional number (e.g., 0.5).

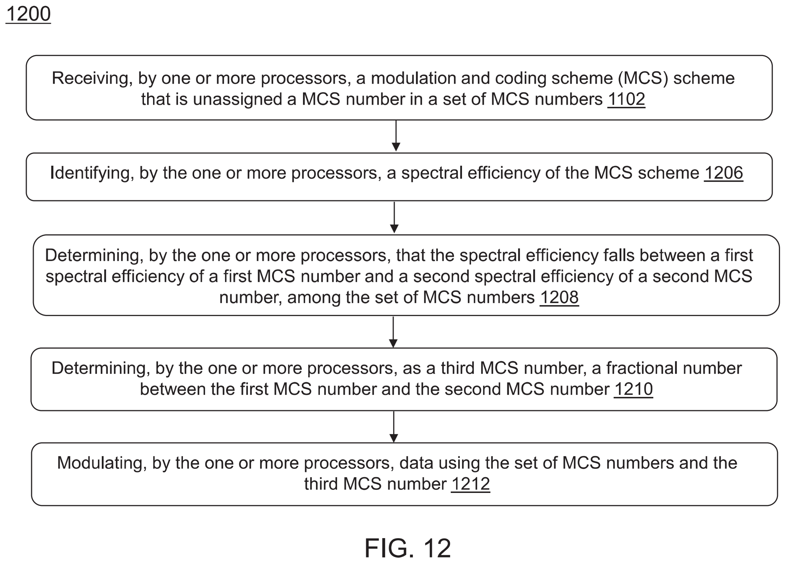

[TBD] FIG. 12 is a flow diagram showing a process 1200 for determining a fractional representation of an MCS number, in accordance with an embodiment. In some embodiments, the process 1200 is performed by one or more processors of a first device (e.g. baseband circuitry 110, transmitter circuitry 120 or processor 2010 of communication system 105, processor 2010 of communication system 108). In other embodiments, the process 1200 is performed by other entities (e.g., a computing system other than the communication system 105 or 108). In some embodiments, the process 1200 includes more, fewer, or different steps than shown in FIG. 12.

At step 1202, one or more processors may receive a modulation and coding scheme (MCS) scheme (e.g., MCS scheme 582 corresponding to QPSK, code rate of 2/3, and effective data rate of 1.33bps as shown in FIG. 5C) that is unassigned a MCS number in a set of MCS numbers (e.g., MCS numbers corresponding to index 1-16 in Table 1).

At step 1206, the one or more processors may identify a spectral efficiency of the MCS scheme (e.g., spectral efficiency of the MCS scheme 582).

At step 1208, the one or more processors may determine that the spectral efficiency falls between a first spectral efficiency of a first MCS number (e.g., spectral efficiency of MCS number 1.0) and a second spectral efficiency of a second MCS number (e.g., spectral efficiency of MCS number 2.0), among the set of MCS numbers (e.g., MCS numbers corresponding to index 1-16 in Table 1).

In some implementations, each of the first MCS number (e.g., 1.0) and the second MCS number (e.g., 2.0) may be an integer greater than or equal to 1. The second MCS number may be 1 greater than the first MCS number. In some implementations, the first spectral efficiency and the second spectral efficiency may be two closest spectral efficiencies to the spectral efficiency of the MCS scheme (e.g., two closest spectral efficiencies to the spectral efficiency of the MCS scheme 582), among the set of MCS numbers.

At step 1212, the one or more processors may determine, as a third MCS number (e.g., MCS number 1.5), a fractional number between the first MCS number (e.g., 1.0) and the second MCS number (e.g., 2.0). In some implementations, the third MCS number may be 0.5 greater than the first MCS number. The third MCS number may be 0.5 greater than the first MCS number (e.g., in case in which the first MCS number is 1.0, the second MCS number is 2.0, and the third MCS number is 1.5) or is 0.25 greater than the first MCS number (e.g., in case in which the first MCS number is 1.5, the second MCS number is 2.0, and the third MCS number is 1.75). In some implementations, a minimum number of bits (e.g., 4 bits) that represents the set of MCS numbers (e.g., MCS numbers corresponding to index 1-16 in Table 1) may be one less than a minimum number of bits (e.g., 5 bits) that represents the set of MCS numbers and the third MCS number (e.g., MCS numbers corresponding to index 1-16 and 18 in Table 1). In some implementations, the third MCS number is one of 1.5, 3.5, 4.5 or 7.5 (see FIG. 5A to FIG. 5C).

At step 1214, the one or more processors (e.g., modulator 320) may modulate data using the set of MCS numbers and the third MCS number (e.g., MCS numbers corresponding to index 1-16 and 18 in Table 1).

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

**EP 4 730 679 A1**

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

**Claims**

1.  A method comprising:

    receiving, by one or more processors, a first modulation and coding scheme (MCS) number which is greater than or equal to 1;
    determining, by the one or more processors, from the first MCS number, a plurality of bits representing a first part of the first MCS number and a first bit representing a difference between the first part and the first MCS number, wherein the difference is smaller than 1;
    determining, by the one or more processors, (1) a first set of MCS parameters corresponding to the first part of the first MCS number and (2) a second set of MCS parameters corresponding to the first part of the first MCS number plus a first predetermined fractional number;
    selecting, by the one or more processors, using the first bit, a third set of MCS parameters from one of the first set of MCS parameters or the second set of MCS parameters; and
    modulating, by the one or more processors, data using the third set of MCS parameters.

2.  The method of claim 1, wherein
    the third set of MCS parameters comprises at least one of a code rate, a modulation size, or a data rate.

3.  The method of claim 1 or 2, wherein
    the first part of the MCS number is an integer greater than or equal to 1.

4.  The method of claim 3, wherein
    the first predetermined fractional number is 0.5.

5.  The method of any one of the claims 1 to 4, wherein
    a spectral efficiency of the first set of MCS parameters is smaller than a spectral efficiency of the second set of MCS parameters.

6.  The method of any one of the claims 1 to 5, wherein the one or more processors are further configured to:

    receive a second MCS number which is greater than or equal to the first MCS number;
    determine, from the second MCS number, a plurality of bits representing the first MCS number and a second bit representing a difference between the first MCS number and the second MCS number, wherein the difference is smaller than 1;
    determine (1) the third set of MCS parameters corresponding to the first MCS number and (2) a fourth set of MCS parameters corresponding to the first MCS number plus a second predetermined fractional number; and

select, using the second bit, a set of MCS parameters from one of the third set of MCS parameters or the fourth set of MCS parameters.

7. The method of claim 6, wherein
the second predetermined fractional number is 0.5 times the first predetermined fractional number.

8. The method of any one of the claims 1 to 7, wherein
the first part of the first MCS number plus the first predetermined fractional number corresponds to one of 1.5, 3.5, 4.5 or 7.5.

9. A system comprising:
one or more processors configured to control and/or carry out a method as set forth in any one of the preceding claims.

10. A system comprising:
one or more processors configured to:

receive a modulation and coding scheme (MCS) scheme that is unassigned a MCS number in a set of MCS numbers;
identify a spectral efficiency of the MCS scheme;
determine that the spectral efficiency falls between a first spectral efficiency of a first MCS number and a second spectral efficiency of a second MCS number, among the set of MCS numbers;
determine, as a third MCS number, a fractional number between the first MCS number and the second MCS number; and
modulate data using the set of MCS numbers and the third MCS number.

11. The system of claim 10, wherein

each of the first MCS number and the second MCS number is an integer greater than or equal to 1, and
the second MCS number is 1 greater than the first MCS number;
wherein in particular
the third MCS number is 0.5 greater than the first MCS number.

12. The system of claim 10 or 11, wherein

the first spectral efficiency and the second spectral efficiency are two closest spectral efficiencies to the spectral efficiency of the MCS scheme, among the set of MCS numbers; wherein in particular
the third MCS number is 0.5 greater than the first MCS number or is 0.25 greater than the first MCS number.

13. The system of any one of the claims 10 to 12, wherein
a minimum number of bits that represents the set of MCS numbers is one less than a minimum number of bits that represents the set of MCS numbers and the third MCS number.

14. The system of any one of the claims 10 to 13, wherein
the third MCS number is one of 1.5, 3.5, 4.5 or 7.5.

15. The system of any one of the claims 10 to 13, wherein
the third MCS number corresponds to one of 17, 19, 20 or 23 in an integer form.

FIG. 1

Computing system 2000

Cache 2020

Processor 2010

I/O Components 2050

Communication System 2040

Network Interface Device 2030

Memory 2060

Display 2070

Input Device 2080

FIG. 2

FIG. 3

EP 4 730 679 A1

400

bits $b_i$ 410

$b_4$ | $b_3$ | $b_2$ | $b_1$ | $b_0$

412

$b_3$ | $b_2$ | $b_1$ | $b_0$ | . | $b_4$

Integer part
(IP) 420

Fractional
part (FP) 422

FIG. 4A

EP 4 730 679 A1

450

FIG. 4B

FIG. 5A

EP 4 730 679 A1

EP 4 730 679 A1

550

| MCS (fractional) | MCS[4] | MCS[3:0] | Modulation | Code rate | Eff. data rate |
|---|---|---|---|---|---|
| 0 | 0 | 0 | BPSK | 1/2 | 0.5 |
| 1 | 0 | 1 | QPSK | 1/2 | 1 |
| 17 (1.5) | 1 | 1 | QPSK | 2/3 | 1.33 |
| 2 | 0 | 2 | QPSK | 3/4 | 1.5 |
| 3 | 0 | 3 | 16 | 1/2 | 2 |
| 19 (3.5) | 1 | 3 | 16 | 2/3 | 2.67 |
| 4 | 0 | 4 | 16 | 3/4 | 3 |
| 20 (4.5) | 1 | 4 | 16 | 5/6 | 3.33 |
| 5 | 0 | 5 | 64 | 2/3 | 4 |
| 6 | 0 | 6 | 64 | 3/4 | 4.5 |
| 7 | 0 | 7 | 64 | 5/6 | 5 |
| 23 (7.5) | 1 | 7 | 256 | 2/3 | 5.33 |
| 8 | 0 | 8 | 256 | 3/4 | 6 |
| 9 | 0 | 9 | 256 | 5/6 | 6.67 |
| 10 | 0 | 10 | 1K | 3/4 | 7.5 |
| 11 | 0 | 11 | 1K | 5/6 | 8.33 |
| 12 | 0 | 12 | 4K | 3/4 | 9 |
| 13 | 0 | 13 | 4K | 5/6 | 10 |

FIG. 5B

580

582

| Modulation | 1/2 | 2/3 | 3/4 | 5/6 |
|---|---|---|---|---|
| BPSK | nMCS = 0 (bps = 0.5) MCS = 0.0 | (bps = 0.67) | (bps = 0.75) | (bps = 0.83) |
| QPSK | nMCS = 1 (bps = 1.0) MCS = 1.0 | nMCS = 17 (bps = 1.33) MCS = 1.5 | nMCS = 2 (bps = 1.5) MCS = 2.0 | (bps = 1.67) |
| 16 − QAM | nMCS = 3 (bps = 2.0) MCS = 3.0 | nMCS = 19 (bps = 2.67) MCS = 3.5 | nMCS = 4 (bps = 3.0) MCS = 4.0 | nMCS = 20 (bps = 3.33) MCS = 4.5 |
| 64 − QAM | (bps = 3.0) | nMCS = 5 (bps = 4.0) MCS = 5.0 | nMCS = 6 (bps = 4.5) MCS = 6.0 | nMCS = 7 (bps = 5.0) MCS = 7.0 |
| 256 − QAM | (bps = 4.0) | nMCS = 23 (bps = 5.33) MCS = 7.5 | nMCS = 8 (bps = 6.0) MCS = 8.0 | nMCS = 9 (bps = 6.67) MCS = 9.0 |
| 1K − QAM | (bps = 5.0) | (bps = 6.67) | nMCS = 10 (bps = 7.5) MCS = 10.0 | nMCS = 11 (bps = 8.33) MCS = 11.0 |
| 4K − QAM | (bps = 6.0) | (bps = 8.0) | nMCS = 12 (bps = 9.0) MCS = 12.0 | nMCS = 13 (bps = 10.0) MCS = 13.0 |

584

586

588

Code Rate

FIG. 5C

EP 4 730 679 A1

600

602    604

| Modulation | 1/2 | 2/3 | 3/4 | 5/6 |
|---|---|---|---|---|
| BPSK | nMCS = 0 (bps = 0.5) MCS = 0.0 | nMCS = 16 (bps = 0.67) MCS = 0.5 | (bps = 0.75) | (bps = 0.83) |
| QPSK | nMCS = 1 (bps = 1.0) MCS = 1.0 | nMCS = 17 (bps = 1.33) MCS = 1.5 | nMCS = 2 (bps = 1.5) MCS = 2.0 | (bps = 1.67) |
| 16 – QAM | nMCS = 3 (bps = 2.0) MCS = 3.0 | nMCS = 19 (bps = 2.67) MCS = 3.5 | nMCS = 4 (bps = 3.0) MCS = 4.0 | (bps = 3.33) |
| 64 – QAM | (bps = 3.0) | nMCS = 5 (bps = 4.0) MCS = 5.0 | nMCS = 6 (bps = 4.5) MCS = 6.0 | nMCS = 7 (bps = 5.0) MCS = 7.0 |
| 256 – QAM | (bps = 4.0) | nMCS = 23 (bps = 5.33) MCS = 7.5 | nMCS = 8 (bps = 6.0) MCS = 8.0 | nMCS = 9 (bps = 6.67) MCS = 9.0 |
| 1K – QAM | (bps = 5.0) | (bps = 6.67) | nMCS = 10 (bps = 7.5) MCS = 10.0 | nMCS = 11 (bps = 8.33) MCS = 11.0 |
| 4K – QAM | (bps = 6.0) | (bps = 8.0) | nMCS = 12 (bps = 9.0) MCS = 12.0 | nMCS = 13 (bps = 10.0) MCS = 13.0 |

606
608

Code Rate

FIG. 6

EP 4 730 679 A1

700

| Modulation \\ Code Rate | 1/2 | 2/3 | 3/4 | 5/6 |
|---|---|---|---|---|
| BPSK | nMCS = 0 (bps = 0.5) MCS = 0.0 | nMCS = 16 (bps = 0.67) MCS = 0.5 | (bps = 0.75) | (bps = 0.83) |
| QPSK | nMCS = 1 (bps = 1.0) MCS = 1.0 | nMCS = 17 (bps = 1.33) MCS = 1.5 | nMCS = 2 (bps = 1.5) MCS = 2.0 | nMCS = 18 (bps = 1.67) MCS = 2.5 |
| 16 – QAM | nMCS = 3 (bps = 2.0) MCS = 3.0 | nMCS = 19 (bps = 2.67) MCS = 3.5 | nMCS = 4 (bps = 3.0) MCS = 4.0 | nMCS = 20 (bps = 3.33) MCS = 4.5 |
| 64 – QAM | (bps = 3.0) | nMCS = 5 (bps = 4.0) MCS = 5.0 | nMCS = 6 (bps = 4.5) MCS = 6.0 | nMCS = 7 (bps = 5.0) MCS = 7.0 |
| 256 – QAM | (bps = 4.0) | nMCS = 23 (bps = 5.33) MCS = 7.5 | nMCS = 8 (bps = 6.0) MCS = 8.0 | nMCS = 9 (bps = 6.67) MCS = 9.0 |
| 1K – QAM | (bps = 5.0) | (bps = 6.67) | nMCS = 10 (bps = 7.5) MCS = 10.0 | nMCS = 11 (bps = 8.33) MCS = 11.0 |
| 4K – QAM | (bps = 6.0) | (bps = 8.0) | nMCS = 12 (bps = 9.0) MCS = 12.0 | nMCS = 13 (bps = 10.0) MCS = 13.0 |

702 704 706 708 710 712

Code Rate

FIG. 7

800

802 804

| Modulation | 1/2 | 2/3 | 3/4 | 5/6 | 7/8 |
|---|---|---|---|---|---|
| BPSK | nMCS = 0<br>(bps = 0.5)<br>MCS = 0.0 | nMCS = 16<br>(bps = 0.67)<br>MCS = 0.5 | (bps = 0.75) | (bps = 0.83) | (bps = 0.88) |
| QPSK | nMCS = 1<br>(bps = 1.0)<br>MCS = 1.0 | nMCS = 17<br>(bps = 1.33)<br>MCS = 1.5 | nMCS = 2<br>(bps = 1.5)<br>MCS = 2.0 | nMCS = 18<br>(bps = 1.67)<br>MCS = 2.5 | (bps = 1.75) |
| 16 – QAM | nMCS = 3<br>(bps = 2.0)<br>MCS = 3.0 | nMCS = 19<br>(bps = 2.67)<br>MCS = 3.5 | nMCS = 4<br>(bps = 3.0)<br>MCS = 4.0 | nMCS = 20<br>(bps = 3.33)<br>MCS = 4.5 | (bps = 3.5) |
| 64 – QAM | (bps = 3.0) | nMCS = 5<br>(bps = 4.0)<br>MCS = 5.0 | nMCS = 6<br>(bps = 4.5)<br>MCS = 6.0 | nMCS = 7<br>(bps = 5.0)<br>MCS = 7.0 | (bps = 5.25) |
| 256 – QAM | (bps = 4.0) | nMCS = 23<br>(bps = 5.33)<br>MCS = 7.5 | nMCS = 8<br>(bps = 6.0)<br>MCS = 8.0 | nMCS = 9<br>(bps = 6.67)<br>MCS = 9.0 | (bps = 7.0) |
| 1K – QAM | (bps = 5.0) | (bps = 6.67) | nMCS = 10<br>(bps = 7.5)<br>MCS = 10.0 | nMCS = 11<br>(bps = 8.33)<br>MCS = 11.0 | nMCS = 27<br>(bps = 8.75)<br>MCS = 11.5 |
| 4K – QAM | (bps = 6.0) | (bps = 8.0) | nMCS = 12<br>(bps = 9.0)<br>MCS = 12.0 | nMCS = 13<br>(bps = 10.0)<br>MCS = 13.0 | nMCS = 29<br>(bps = 10.5)<br>MCS = 13.5 |

Code Rate

806
808
810
812
814
816

FIG. 8

EP 4 730 679 A1

Parameter Selector 900

MCS number 910

MSB 912

$b_4$ $b_3$ $b_2$ $b_1$ $b_0$

920

4-bit MCS format 922

$b_3$ $b_2$ $b_1$ $b_0$

4-bit MCS-logic 925

R, QAM, bps 927

5-bit MCS-logic 935

R, QAM, bps 937

$b_4 == 0$

$b_4 == 1$

940

R, QAM, bps 950

FIG. 9

27

FIG. 10

1100

Receiving, by one or more processors, a first modulation and coding scheme (MCS) number which is greater than or equal to 1 1102

Determining, by the one or more processors, from the first MCS number, a plurality of bits representing a first part of the first MCS number and a first bit representing a difference between the first part and the first MCS number. The difference may be smaller than 1 1106

Encoding, determine, by the one or more processors, (1) a first set of MCS parameters corresponding to the first part of the first MCS number and (2) a second set of MCS parameters corresponding to the first part of the first MCS number plus a first predetermined fractional number 1108

Selecting, by the one or more processors, using the first bit, a third set of MCS parameters from one of the first set of MCS parameters or the second set of MCS parameters 1110

Modulating, by the one or more processors, data using the third set of MCS parameters 1112

FIG. 11

EP 4 730 679 A1

1200

```
┌─────────────────────────────────────────────────────────────────────┐
│ Receiving, by one or more processors, a modulation and coding scheme   │
│ (MCS) scheme that is unassigned a MCS number in a set of MCS            │
│ numbers 1102                                                            │
└─────────────────────────────────────────────────────────────────────┘
                                  │
                                  ▼
┌─────────────────────────────────────────────────────────────────────┐
│ Identifying, by the one or more processors, a spectral efficiency of   │
│ the MCS scheme 1206                                                     │
└─────────────────────────────────────────────────────────────────────┘
                                  │
                                  ▼
┌─────────────────────────────────────────────────────────────────────┐
│ Determining, by the one or more processors, that the spectral          │
│ efficiency falls between a first spectral efficiency of a first MCS     │
│ number and a second spectral efficiency of a second MCS number,        │
│ among the set of MCS numbers 1208                                       │
└─────────────────────────────────────────────────────────────────────┘
                                  │
                                  ▼
┌─────────────────────────────────────────────────────────────────────┐
│ Determining, by the one or more processors, as a third MCS number, a   │
│ fractional number between the first MCS number and the second MCS      │
│ number 1210                                                             │
└─────────────────────────────────────────────────────────────────────┘
                                  │
                                  ▼
┌─────────────────────────────────────────────────────────────────────┐
│ Modulating, by the one or more processors, data using the set of MCS   │
│ numbers and the third MCS number 1212                                   │
└─────────────────────────────────────────────────────────────────────┘
```

FIG. 12

# EUROPEAN SEARCH REPORT

**Application Number**

EP 25 20 8914

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/000112 A1 (GUANGDONG OPPO MOBILE TELECOMMUNICATIONS CORP LTD [CN]) 4 January 2024 (2024-01-04) | 1-15 | INV. H04L1/00 |
| Y | * paragraph [0030] - paragraph [0114] * * figures 2-4; tables 1-7 * ----- | 1-9 | |
| X | ALICE CHEN (QUALCOMM): "Unequal Modulation in MIMO TxBF and New MCS for 11bn", IEEE DRAFT; 11-24-0498-01-00BN-UNEQUAL-MODULATION-IN-M IMO-TXBF-AND-NEW-MCS-FOR-11BN, IEEE-SA MENTOR, PISCATAWAY, NJ USA , vol. 802.11 UHR; 802.11bn, no. 1 8 April 2024 (2024-04-08), pages 1-34, XP068303151, Retrieved from the Internet: URL:https://mentor.ieee.org/802.11/dcn/24/ 11-24-0498-01-00bn-unequal-modulation-in-m imo-txbf-and-new-mcs-for-11bn.pptx [retrieved on 2024-04-08] | 10-15 | |
| Y | * page 6 - page 8 * ----- | 1-9 | TECHNICAL FIELDS SEARCHED (IPC) H04L |
| X,P | RON PORAT (BROADCOM): "5bit MCS Table Design", IEEE DRAFT; 11-24-1826-00-00BN-5BIT-MCS-TABLE-DESIGN, IEEE-SA MENTOR, PISCATAWAY, NJ USA , vol. 802.11 UHR; 802.11bn 10 November 2024 (2024-11-10), pages 1-8, XP068313926, Retrieved from the Internet: URL:https://mentor.ieee.org/802.11/dcn/24/ 11-24-1826-00-00bn-5bit-mcs-table-design.p ptx [retrieved on 2024-11-10] * page 2 - page 4 * ----- | 1-15 | |

The present search report has been drawn up for all claims

| Place of search | Date of completion of the search | Examiner |
|---|---|---|
| Munich | 11 February 2026 | Vucic, Nikola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

## LACK OF UNITY OF INVENTION
### SHEET B

**Application Number**

EP 25 20 8914

The Search Division considers that the present European patent application does not comply with the requirements of unity of invention and relates to several inventions or groups of inventions, namely:

1. claims: 1-15

   Adding a new MCS to a set of existing MCSs

1.1. claims: 1-9

   Determination of MCS parameters from a received MCS number.

1.2. claims: 10-15

   Determination of an MCS number for an unassigned MCS scheme.
   ---

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 25 20 8914

11-02-2026

| Patent document cited in search report | Publication date | Patent family member(s) | Publication date |
|---|---|---|---|
| WO 2024000112 A1 | 04-01-2024 | CN 119404477 A | 07-02-2025 |
| | | EP 4544746 A1 | 30-04-2025 |
| | | JP 2025521605 A | 10-07-2025 |
| | | US 2025126010 A1 | 17-04-2025 |
| | | WO 2024000112 A1 | 04-01-2024 |

EPO FORM P0459